# EUROPÄISCHE PATENTSCHRIFT

(11) **EP 1 545 224 B1**
(45) Veröffentlichungstag und Bekanntmachung des Hinweises auf die Patenterteilung: **08.02.2006**
(21) Anmeldenummer: 03753438.5
(22) Anmeldetag: 22.09.2003
(51) Int. Cl.: A22C 13/00

(54) **MEHRSCHICHTIGE, SCHLAUCHFÖRMIGE NAHRUNGSMITTEL-BARRIEREHÜLLE MIT TRANSFEREIGENSCHAFTEN**
MULTILAYERED, TUBE-SHAPED FOOD BARRIER WRAPPERS HAVING TRANSFER PROPERTIES
PEAU BARRIERE ALIMENTAIRE, TUBULAIRE, MULTICOUCHE, PRESENTANT DES PROPRIETES DE TRANSFERT

(30) Priorität: 23.09.2002 DE 10244088
(43) Veröffentlichungstag der Anmeldung: 29.06.2005
(73) Patentinhaber: Kalle GmbH, 65025 Wiesbaden (DE)
(72) Erfinder: KÖNIG, Martina, 65207 Wiesbaden (DE); FERON, Bernhard, 65185 Wiesbaden (DE); FRITZ, Hans-Gerhard, 73066 Uhingen (DE)
(74) Vertreter: Plate, Jürgen
(86) Internationale Anmeldenummer: PCT/EP2003/010500
(87) Internationale Veröffentlichungsnummer: WO 2004/028258

(56) Entgegenhaltungen:
- EP-A- 0 319 732
- EP-A- 0 597 363
- EP-A- 0 986 957
- EP-A- 0 992 194
- WO-A-00/40093
- WO-A-98/31731
- DE-A- 19 500 470
- DE-A- 19 822 979
- DATABASE WPI Section Ch, Week 200035 Derwent Publications Ltd., London, GB; Class A92, AN 2000-404182 XP002269026 & JP 2000 139401 A (OSAKA KAGAKU GOKIN KK) , 23. Mai 2000 (2000-05-23)

## Beschreibung

Die Erfindung betrifft eine schlauchförmige Nahrungsmittelhülle mit Barrierewirkung für Sauerstoff und Wasserdampf, die 2 oder mehr Schichten aufweist und in der Lage ist, einen Nahrungsmittelzusatzstoff aufzunehmen, zu speichern und an das Füllgut abzugeben.

Nahrungsmittelhüllen der genannten Art sind prinzipiell bekannt. Das sind beispielsweise Verpackungsfolien für Fleisch-, Wurst- oder Fischprodukte, die mit einem Farbstoff und Stärke oder einem Stärkederivat als Farbstoffträger versehen sind. Beim Erhitzen geht der Farbstoff dann zumindest teilweise auf das Nahrungsmittel über (DE 296 00 547 U1). Bekannt ist auch eine Verpackungsfolie für Nahrungsmittel, die auf der dem Nahrungsmittel zugewandten Seite eine Schicht aufweist, die eine Geschmacks- bzw. Aromakomponente und ein Polysaccharid oder Protein als Bindemittel enthält (WO 98/31731; EP-A 986 957). Die Trägerschicht der Folie besteht dabei aus Polyolefin, Polyester, Polyvinylidenchlorid (PVDC), Polyvinylchlorid (PVC) oder Polystyrol.

In der JP-A 139401/2000 ist eine Folie offenbart, mit der sich Lebensmittelfarbe auf Wurstbrät, Schinken oder ähnliche Nahrungsmittel übertragen läßt. Die Folie weist dazu eine Beschichtung auf, die neben einem Lebensmittelfarbstoff noch einen eßbaren Weichmacher, wie Glycerin, Sorbit oder Propylenglykol, enthält.

In der DE 198 46 305 A1 ist schließlich eine Barrierefolie aus Kunststoffmaterial beschrieben, die Schichten auf Basis von Polyamid wie auch von Polyolefin umfaßt und auf der Innenseite mit einer Lage aus einem gewebten, gewirkten oder gestrickten, saugfähigen, mit Farb- oder Aromastoffen getränkten Material verbunden ist. Beim Kochen oder Brühen werden diese Stoffe von der Innenlage auf das Nahrungsmittel übertragen. Die saugfähige Innenlage ist dabei mit der Kunststoff-Barrierehülle verklebt. Schlauchförmige Hüllen lassen sich aus der Folie durch Heißsiegeln oder Kleben herstellen.

Die nicht vorveröffentlichte DE 102 17 132 offenbart eine Nahrungsmittel-Doppelhülle, d.h. eine Hülle, die zwei übereinander liegende, nur in ihrem jeweiligen Anfangsbereich mechanisch miteinander verbundene Hüllen umfaßt. Dabei übernimmt die äußere Hülle im wesentlichen die Barrierefunktion und verleiht der Gesamtkonstruktion auch den überwiegenden Anteil an mechanischer Stabilität, während die innere Hülle als intermediärer Träger für einen Nahrungsmittelzusatzstoff dient.

Die bekannten schlauchförmigen Hüllen mit einem übertragbaren Nahrungsmittelzusatzstoff haben verschiedene Nachteile. Sie sind entweder nur nach sehr aufwendigen Verfahren herstellbar (das gilt beispielsweise für die Hülle mit der Innenlage aus einem saugfähigen Material) oder sie können den Nahrungsmittelzusatzstoff nicht in der gewünschten Menge speichern und übertragen.

Es besteht daher nach wie vor die Aufgabe, eine Nahrungsmittelhülle, vorzugsweise eine Wursthülle, zur Verfügung zu stellen, die besonders wenig durchlässig ist für Sauerstoff und Wasserdampf. Sie soll das Füllgut zuverlässig gegen das Eindringen von Keimen und Pilzen schützen. Darüber hinaus soll sie in der Lage sein, einen Nahrungsmittelzusatzstoff, insbesondere einen Farb-, Geruchs-, Aroma- und/oder Dekorationsstoff, in einer besonders wirkungsvollen Menge aufzunehmen, zu speichern und diesen nach dem Befüllen im Zuge einer physikalischen und/oder thermischen Nachbehandlung (z.B. Brühen, Kochen oder Bedampfen) auf die Oberfläche und/oder auf das Volumen des Füllgutes (z.B. Brät, Wurstmasse, Fleischmasse) zu übertragen. Die Nahrungsmittelhülle soll sich schließlich auch wirtschaftlich und betriebssicher, möglichst in kontinuierlich ablaufenden Verfahren, herstellen und verarbeiten lassen.

Die Aufgabe wird gelöst durch eine Innenschicht, die eine Matrix aus einem thermoplastischen Kunststoffmaterial und, verteilt darin, einen organischen Füllstoff umfaßt.

Gegenstand der vorliegenden Erfindung ist demgemäß eine mindestens zweischichtige, schlauchförmige Nahrungsmittelhülle mit Barrierewirkung für Sauerstoff und Wasserdampf, die in der Lage ist, einen Nahrungsmittelzusatzstoff aufzunehmen, zu speichern und an das Füllgut abzugeben und die dadurch gekennzeichnet ist, daß die innere, dem Nahrungsmittel zugewandte Schicht eine Matrix aus einem organischen, thermoplastischen Polymermaterial und, eingebettet darin, mindestens einen pulverförmigen organischen Füllstoff umfaßt, der mindestens einen auf das Füllgut transferierbaren Nahrungsmittelzusatzstoff enthält. Der transferierbare Nahrungsmittelzusatzstoff ist dabei insbesondere ein Farb-, Geruchs-, Aroma- und/oder Dekorationsmedium.

Der organische Füllstoff quillt in einem Temperaturbereich von größer als 0°C bis zu weniger als 40°C unter Einwirkung fluider Systeme (z.B. wäßrige Systeme, wäßrige Lösungen oder Suspensionen, andere niederviskose Medien) zunächst unter Vergrößerung seines Volumens. Er nimmt auf diese Weise den transferierbaren Nahrungsmittelzusatzstoff auf und speichert ihn. Nach dem Einfüllen des Lebensmittels löst er sich unter Einwirkung von Feuchtigkeit, Wasserdampf oder anderen Fluiden beim Erwärmen auf eine Temperatur im Bereich von mehr als 40°C bis zu weniger als 100°C zumindest partiell auf und überträgt die gespeicherten Zusatzstoffe auf das Nahrungsmittel. Geeignete Füllstoffe sind besonders Naturstoffe, wie Carrageenan, Agar, Sojabohnen-Proteine, Johannisbrotkernmehl, native, destrukturierte und/oder modifizierte Stärken sowie Mischungen der vorgenannten Substanzen. Der organische Füllstoff läßt sich beispielsweise im Zuge eines Compoundierprozesses unter Verwendung eines gleichsinnig drehenden, dichtkämmenden Zweischnecken-extruders in eine Thermoplastschmelze einmischen.

Die zu wählende Partikelgröße des Füllstoffs (vor der Zugabe des transferierbaren Nahrungsmittelzusatzstoffs) hängt in erster Linie von der zu realisierenden Dicke der Füllstoffträgerschicht ab. Sie sollte für Schichtdicken S_{F} im Bereich von 60 bis 100 µm einen d(0,5)-Wert von weniger als 20 µm aufweisen, was im allgemeinen durch eine Füllstoff-Fraktionierung erreicht werden kann. Für Schichtdicken im Bereich von 100 bis 200 µm darf der d(0,5)-Wert durchaus auf 50 µm anwachsen. Je nach Materialart kann die Gestalt der einzelnen Füllstoffpartikel dabei von kugelförmig bis scheibenförmig, ellipsoid, nadelförmig oder auch unregelmäßig geformt variieren. Der Anteil des Füllstoffs beträgt zweckmäßig bis zu 60 Gew.-%, bevorzugt 15 bis 45 Gew.-%, besonders bevorzugt 25 bis 35 Gew.-%, jeweils bezogen auf das Gewicht der Innenschicht.

Der transferierbare Nahrungsmittelzusatzstoff ist unter technischen Normalbedingungen vorzugsweise flüssig. Besonders bevorzugt ist Flüssigrauch. Dabei kann es sich um einen natürlichen (d.h. einen sauren), einen im wesentlichen neutralen oder einen alkalisch gestellten Flüssigrauch handeln. Gegebenenfalls ist der Flüssigrauch von Teerbestandteilen befreit und/oder enthält Zusätze, insbesondere viskositätserhöhende Zusätze. Zu nennen als Additiv ist besonders Schellack, speziell Blätterschellack. Geeignete Flüssigrauchtypen sind kommerziell erhältlich. Weitere geeignete flüssige Medien sind Lösungen, speziell wäßrige Lösungen von Lebensmittelfarbstoffen. Verwendbar sind auch flüssiges Grillhähnchenaroma und ähnliche flüssige Aromen.

Der Anteil des transferierbaren Nahrungsmittelzusatzstoffs beträgt allgemein etwa 5 bis 150 Gew.-%, bevorzugt etwa 30 bis 80 Gew.-%, jeweils bezogen auf das Gewicht des partikelförmigen Füllstoffs.

An die für die Innenschicht der Schlauchfolie einzusetzende Thermoplastmatrix werden folgende Anforderungen gestellt:
- Wasserdampfpermeationskoeffizient P_{H₂O} im Bereich von 3 bis 20 g/m² d;
- physiologische Unbedenklichkeit;
- Aufbereitungs- und Verarbeitungstemperatur des thermoplastischen Kunststoffs liegt im Bereich von 90 bis 180°C, bevorzugt von 110 bis 150 °C;
- Kristallitschmelztemperatur bzw. Fließtemperatur des thermoplastischen Kunststoffs beträgt etwa 80°C bis 110°C.

Unter Berücksichtigung aller dieser Kriterien erweist sich Ethylen/Vinylacetat-Copolymer (EVA) als besonders geeigneter Matrixwerkstoff für die Schlauchfolieninnenschicht. Jedoch sind auch andere Thermoplaste denkbar, welche die vorstehend formulierten Kriterien erfüllen. Von den Ethylen/Vinylacetat-Copolymeren (EVA) sind solche Typen bevorzugt, deren Vinylacetatanteil (VA-Anteil) zwischen 5 und 50 Gew.-%, insbesondere zwischen 15 und 40 Gew.-% beträgt. Mit zunehmendem VA-Gehalt wächst der Permeationskoeffizient P_{H₂O} für Wasserdampf überproportional an, was sich für das Systemverhalten als vorteilhaft erweist. Andererseits sinkt mit wachsendem VA-Gehalt die Kristallitschmelztemperatur ab, was für den angestrebten Einsatzzweck nachteilig ist. Bedingt durch diesen gegensätzlichen Eigenschaftsverlauf erweisen sich solche EVA-Typen als besonders geeignet, deren VA-Gehalt etwa zwischen 18 und 34 Gew.-% liegt. Ferner können auch Gemische von EVA-Typen mit VA-Gehalten von 18 und 34 Gew.-% als Thermoplastmatrizes Anwendung finden, wobei der EVA-Typ mit dem geringeren VA-Anteil im Überschuß vorhanden sein soll. Eine prinzipielle Möglichkeit, auch EVA-Typen mit VA-Gehalten von mehr als 34 Gew.-% einzusetzen, ist weiter unten beschrieben.

Um eine gute Verbundhaftung zwischen der mit organischen Füllstoffen modifizierten Innenschicht und der sich in Radialrichtung anschließenden weiteren polymeren Funktionsschicht sicherzustellen, hat es sich als vorteilhaft erwiesen, der Polymermatrix im Zuge des Compoundierschrittes einen sog. Compatibilizer zuzumischen. Ein derartiger Compatibilizer, der in einem separaten Aufbereitungsschritt generiert wird, kann beispielsweise aus dem Innenschicht-Matrixmaterial bestehen, dem nach einer Peroxidradikalinitiierung zwischen 0,1 und 10 Gew.-%, vorzugsweise zwischen 0,3 und 5 Gew.-%, Maleinsäureanhydrid oder ein alternatives Compatibilizermolekül (wie Glycidylmethacrylat, GMA) aufgepfropft wurden.

Sollen Ethylen/Vinylacetat-Copolymere (EVA) mit Vinylacetat-Gehalten von mehr als 34 Gew.-% verwendet werden, die hohe Werte beim Wasserdampfpermeations-Koeffizienten aufweisen, stehen diesem Bestreben zunächst die abgesenkten Kristallitschmelztemperaturen (weniger als 80°C) entgegen. So weist ein EVA-Typ mit einem VA-Gehalt von 40 Gew.-% eine Kristallitschmelztemperatur Tₘ von 50°C auf. Dieses Problem läßt sich dadurch lösen, daß dem Innenschicht-Matrixmaterial (z.B. EVA) in einem vorgeschalteten Compoundierschritt nach einer peroxidradikalischen EVA-Kettenaktivierung Organosilanmoleküle (z.B. Vinyltrimethoxysilan oder Vinyltriethoxysilan) aufgepfropft werden. Nach dem Ausformen des gepfropften Innenschichtmaterials im thermoplastischen Zustand erfolgt unter Einwirkung von Wassermolekülen im Zuge einer Hydrolysereaktion eine Silanolbildung. Eine anschließende Kondensationsreaktion führt zu einer Vernetzung des Matrixmaterials im Festzustand. Durch die damit verbundene Ausbildung eines dreidimensionalen, kovalent verknüpften Raumnetzwerks können derartige Elastomere auch Temperaturen ausgesetzt werden, die deutlich über der Schmelztemperatur Tₘ des als Ausgangsmaterial verwendeten EVA-Typs liegen, ohne daß der Polymerwerkstoff zu fließen beginnt. Dieses Stoffverhalten resultiert aus dem genannten Vulkanisationsschritt.

Im einfachsten Fall können die in liquider bzw. wäßriger Form vorliegenden Farb-, Geruchs-, Aroma- und/oder Dekorationsmedien auf die mit dem Füllgut in Kontakt kommende Oberfläche der Schlauchinnenschicht aufgetragen werden. Derartige Fluide, Suspensionen oder Emulsionen werden von den Füllstoffpartikeln unter gleichzeitigem Quellen derselben aufgenommen und dort gespeichert. Nach dem Befüllen der Nahrungsmittelhüllen mit Brät, Wurst- oder Fleischmasse löst sich - ausgelöst durch einen Brüh- oder Bedampfungsprozeß - der organische Füllstoff, welcher die Farb-, Geruchs-, Aroma- und/oder Dekorationsmedien gespeichert enthält, zumindest partiell auf und überträgt seine Speicherstoffe auf die Oberfläche des Füllgutes.

Überraschend wurde gefunden, daß, bedingt durch die Füllstoff-Partikelgröße, die Übertragung außerordentlich gleichmäßig erfolgt. Als besonders vorteilhaft erweist sich, daß die physikalisch/thermische Nachbehandlung nicht zur Ausbildung eines Gelee-Absatzes zwischen Innenschichtoberfläche und Füllgutoberfläche führt.

Eine alternative, wirtschaftlich und prozeßtechnisch bevorzugte Lösung zur Integration des mindestens einen transferierbaren Nahrungsmittelzusatzstoffs in den jeweiligen organischen Füllstoff der Schlauchinnenschicht stellt sich wie folgt dar:

Eine abgewogene Menge des pulverförmigen organischen Füllstoffs wird in einen Innenmischer verbracht. Durch die Rotation der Mischflügel des Mischers wird das Pulverbett fluidisiert. Mit einer Dosierpumpe wird das flüssige Farb-, Geruchs-, Aroma- und/oder Dekorationsmedium, langsam dosierend, dem Füllstoffpulver zugeführt, bis eine vorgegebene Konzentration, bezogen auf den organischen Füllstoff, erreicht ist. Durch den dynamischen Mischvorgang bedingt, wird das flüssige Additiv vom Füllstoff aufgenommen, ohne daß ein Verklumpen des Füllstoffpulvers selbst bei hohen Flüssigkeitskonzentrationen eintritt. Die Flüssigkeitszugabemengen können, je nach Aufbau des Konzentrats, 5 bis 150 Gew.-%, bevorzugt 30 bis 80 Gew.-%, jeweils bezogen auf die Füllstoffmasse, betragen. Diese Gegebenheit ermöglicht ein genaues gravimetrisches Dosieren des beladenen Füllstoffs in den Zweischneckenextruder, in dem das homogene Einmischen des Füllstoffs in die Thermoplastmatrix erfolgt. Das Ergebnis ist ein gefülltes, bereits mit den Additiven beladenes Thermoplastsystem, das sich direkt auf einer Coextrusionsanlage zur Schlauchinnenschicht weiterverarbeiten läßt.

Die organische Füllstoffe enthaltende Innenschicht ist mit einer zweiten Schicht der Schlauchfolie fest verbunden, wobei die letztere vorzugsweise eine Schicht auf Basis von Polyolefin(en) ist und als Barriereschicht gegen Wasserdampf wirkt. Besonders geeignete Polyolefine sind Polyethylene (speziell PE-HD, PE-LD, PE-LLD) sowie Polypropylen-Homo- und -Copolymere. Darüber hinaus sind auch Ethylen/Octen- und Ethylen/Hexencopolymere verwendbar.

Damit eine feste Schichthaftung zwischen Polyolefin- und Coextrudat-Außen- und -Innenschicht zustande kommt, empfiehlt sich gleichfalls die Zugabe eines sog. Compatibilizers. Hierbei handelt es sich um ein artgleiches Polyolefin, das mit 0,3 bis 5% MAH gegraftet ist und in Zugabemengen zwischen 1 und 10%, bezogen auf das Polyolefin-Grundmaterial, zuaddiert wird.

Grundsätzlich ist es auch möglich, das gesamte Polyolefin, welches für die H₂O-Barriereschicht eingesetzt wird, im Zuge eines vorgeschalteten reaktiven Funktionalisierungsschrittes mit 0,2 bis 3% MAH oder äquivalenten Kopplungsmolekülen (z.B. GMA) zu graften.
Als Sauerstoffbarriereschicht, die als eine dritte Schicht verwirklicht werden kann, empfiehlt sich eine Schicht auf Basis von Polyamiden. Aufgrund einzuhaltender Massetemperaturobergrenzen sind Copolyamide (PA6/PA6.6) oder PA12-Typen bevorzugt. Die auf die Polyolefinschicht aufgepfropften MAH-Moleküle können an die Aminoendgruppen des Polyamids kovalent ankoppeln, so daß dadurch eine intensive Schichthaftung zustande kommt, die durch die zusätzliche Ausbildung von Wasserstoffbrückenbindungen noch verstärkt wird.

Als Stütz- und Barriereschichtverbund für die mit organischen Füllstoffen angereicherte Innenschicht kann auch ein Schichtverbund mit dem Aufbau PA/PO/PA zur Anwendung kommen. Eine weitere Möglichkeit, die angestrebten Barriere- und Stützeigenschaften zu erzielen und die Schichtenzahl limitiert zu halten, besteht in der sogenannten Sperrschichttechnologie. Bei diesem Konzept werden spezielle Polyamidgranulate einem Polyethylen oder Polypropylen zugemischt, welche im Zuge laminarer Scherströmungsvorgänge zu dünnsten Schichten ausgestrichen und als überlappende Sperrlamellen in die PO-Matrix eingelagert werden. Derartige Labyrinthstrukturen bewirken eine deutliche Verbesserung der Barriereeigenschaften. Damit die Ausbildung festhaftender PA-Sperrschichten gelingt und die Funktion des Labyrinth-Konzepts gewährleistet ist, müssen in bezug auf Werkstoffauswahl und Rezeptierung einige wichtige Grundforderungen erfüllt werden, die sich wie folgt umreißen lassen:

Die Fließtemperatur des als Barrierewerkstoff einzusetzenden niederkristallinen Polyamids soll geringfügig unterhalb der Extrusionstemperatur (diese beträgt allgemein 200 bis 215°C) des jeweiligen Polyolefins liegen. Polyamide mit einer solchen Fließtemperatur sind beispielsweise PA 6/66-Copolyamide.

Zur Erhöhung der Wechselwirkungen zwischen Barriere- und Matrixschicht und damit zur Ausbildung festhaftender Schichtstrukturen hat sich die Verwendung eines Compatibilizers als zweckmäßig erwiesen, der Affinität zu den Polymeren in beiden angrenzenden Schichten aufweist. Ein geeigneter Compatibilizer läßt sich beispielsweise herstellen durch Funktionalisieren eines in der Matrix eingesetzten Polyolefins mit Maleinsäureanhydrid (MAH). Durch peroxidradikalische Aktivierung des Polyolefins und anschließendes Aufpfropfen von Maleinsäureanhydrid auf die Kettenradikale entsteht ein Verträglichkeitsvermittler, der mit den Amino-Endgruppen der PA-Copolymere kovalente Bindungen eingehen und damit die Verträglichkeit und Haftfestigkeit der beiden Polymerkomponenten signifikant erhöht.

Mehrschichtfolienschläuche der vorbeschriebenen Art lassen sich in vorteilhafter Weise mit einem dem Fachmann an sich bekannten Schlauchfolien-Coextrusionsprozeß herstellen. Da aber die Innenschicht im Vergleich zu der PO- und PA-Schicht mit relativ niedrigen Massetemperaturen (Z.B. T_{M} = 130°-140°C) extrudiert werden muß, ist eine Wärmetrennung innerhalb des einzusetzenden Coextrusionswerkzeugs unabdingbar notwendig.

Vor diesem Hintergrund haben sich Coextrusionswerkzeuge mit Scheibenwendelverteilersystemen als besonders vorteilhaft erwiesen, wobei zwischen den einzelnen Scheibenwendelverteilerplatten noch Wärmeisolier- bzw. Wärmedämmplatten zwischenzuschalten sind. Der Vorteil eines derartigen Konzeptes im Vergleich zu konventionellen auf zylindrische Dome geschnittenen Wendelverteilersystemen besteht darin, daß jedem Verteilersystem ein diskretes, auf den jeweiligen Kunststoff abgestimmtes Temperaturprofil aufgeprägt werden kann. In Verbindung mit einer zusätzlichen Dorntemperierung ist damit eine optimale thermische Prozeßführung möglich.

Die schlauchförmige Nahrungsmittelhülle gemäß der vorliegenden Erfindung eignet sich besonders als künstliche Wursthülle.

Die nachfolgenden Beispiele illustrieren die Erfindung. Prozente sind darin, soweit nicht anders angegeben oder aus dem Zusammenhang ersichtlich, Gewichtsprozente.

### Beispiel 1:

Als Innenschicht-Matrixmaterial wurde ein Ethylen/Vinylacetat-Copolymer (EVA), Typ ®EVATANE 28-03 der Firma ATOChem mit einem VA-Gehalt von 28 % eingesetzt. In dieses wurde unter Verwendung eines Zweischnecken-Extruders, Typ ZE 25 der Firma Berstorff unfraktioniertes Carrageenan-Pulver bei einer Aufbereitungstemperatur von 120 °C eincompoundiert. Der Masseanteil des EVA betrug 70 %, der des Füllstoffs 30 %. Bezogen auf den EVA-Gehalt des Compounds wurden noch 5 % eines Compatibilizers, Typ ®Fusabond MC 190D (EVA gepfropft mit 5 % MAH) der Fa. DuPont Europe zuaddiert. Aus dem daraus resultierenden Granulat wurden mit Hilfe einer Folienblasanlage der Fa.

Collin Schlauchfolien mit einer mittleren Foliendicke von 180 µm erzeugt. Auf die mit dem Füllgut in Kontakt kommende innere Oberfläche der Schlauchfolie wurde anschließend Flüssigrauch manuell aufgetragen. Der Flüssigrauch bestand aus

| | |
|---|---|
| 33,0 % | einer 4%igen wäßrigen NaOH-Lösung, |
| 8,0 % | Schellack, |
| 7,0 % | eines alkalisch gestellten Flüssigrauchs von Zesti Smoke, |
| 48,9 % | Wasser, |
| 1,0 % | Alginat, |
| 1,0 % | Kieselerde, |
| 1,0 % | einer braunen Lebensmittelfarbe (Eurolake Brown HT) und |
| 0,1 % | Citral. |

Er wurde spontan von den inkorporierten Füllstoffpartikeln unter gleichzeitigem Quellen derselben aufgenommen und darin gespeichert.

Nach einer Lagerzeit von 3 bis 5 Tagen wurden Abschnitte der so präparierten Schlauchfolie mit Fleischwurstbrät gefüllt und dann bei 70 °C gebrüht. Durch den Brühvorgang wurde die Flüssigrauchfarbe und das Flüssigraucharoma durch partielles Lösen der Carrageenan-Partikel sehr gleichmäßig und nahezu vollständig auf das Brät übertragen. Die Proben waren frei von Geleeabsatz; die Hüllen ließen sich leicht vom Wurstbrät abziehen.

### Beispiel 2:

Beispiel 1 wurde in der Weise abgewandelt, daß nunmehr das Matrixmaterial der Innenschicht aus einem EVA-Gemisch aus 45 % EVATANE, Typ 28-05 (VA-Gehalt: 28 %) und 55 % ELVAX, Typ 460 (VA-Gehalt: 18 %) der Fa. DuPont bestand. 70 % von diesem Gemisch wurden mit 30 % unfraktioniertem Carrageenan-Pulver versetzt und die resultierende Mischung mit Hilfe eines Zweischnecken-Extruders, Typ ZE 25, der Fa. Berstorff, unter Zugabe von 5 % des Compatibilizers Fusabond MC 190 D (bezogen auf EVA-Gehalt) compoundiert. Die Schlauchfolienherstellung, die abschnittsweise Innenpräparation und Befüllung der Abschnitte erfolgte wie im Beispiel 1 beschrieben. Dank der rohstoffbedingten Anhebung der Kristallitschmelz-temperatur des Matrixmaterials auf 87 °C konnten die Proben nunmehr bei 85 °C gebrüht werden, ohne daß die Hülle Schaden nahm oder beim Abziehen undefiniert zerriß. Durch die erhöhte Brühtemperatur reduzierte sich zum einen die Brühzeit, zum anderen wurde der Farb- und Aromastoff ohne jeden Geleeabsatz praktisch vollständig auf das Füllgut übertragen.

### Beispiel 3:

In einem Innenmischer, Bauart Henschel, wurde Carrageenan-Pulver fluidisiert. Mit einer Membrandosierpumpe führte man dem Fluidmischer 80 % Flüssigrauch der beschriebenen Art, bezogen auf die eingebrachte Füllstoffmasse, zu. Der Flüssigrauch wurde von dem Carrageenan-Pulver spontan und ohne Klumpenbildung aufgenommen. Als Ergebnis dieses Präparationsschritts erhielt man ein "trockenes" Pulver, das sich mit gravimetrischen Dosiereinrichtungen problemlos dosieren ließ. Das mit dem Flüssigrauch beaufschlagte Füllstoffpulver wurde zusammen mit dem im Beispiel 2 beschriebenen EVA-Gemisch dem Zweischnecken-Extruder, Typ ZE 25, zugeführt. Das Masseverhältnis von reinem Carrageenan-Pulver zu EVA-Gemisch lag bei 30 : 70. Zusätzlich zugegeben wurden wiederum 5 % des Compatibilizers ®Fusabond MC 190 D (bezogen auf den EVA-Gehalt). Die Schlauchfolienherstellung und die Befüllung der Schlauchabschnitte erfolgte wie im Beispiel 1 beschrieben. Eine Präparation der Schlauchabschnitte durch manuelles Auftragen des Flüssigrauchs war nicht mehr erforderlich, da der Flüssigrauch bereits in ausreichender Menge im eincompoundierten Carrageenan-Pulver inkorporiert war. Bei einer Brühtemperatur von 85 °C wurde der Farb- und Aromastoff praktisch vollständig auf das Füllgut (Fleischwurstbrät) übertragen. Ein Geleeabsatz wurde nicht beobachtet. Die Hülle ließ sich zudem leicht abziehen, ohne dabei undefiniert zu zerreißen.

### Beispiel 4:

Beispiel 3 wurde wiederholt mit der Abweichung, daß es sich bei dem im Fluidmischer mit Flüssigrauch präparierten Carrageenan-Pulver um einen fraktionierten Pulveransatz handelte, dessen d(0,5)-Wert aus der Partikelgrößenanalyse bei 16 µm lag. Die reduzierte mittlere Partikelgröße ermöglichte bei sonst identischem Gesamtsystemverhalten die Herstellung von Schlauchfolien mit einer geringeren Wandstärke (100 bis 110 µm).

## Patentansprüche

1. Mindestens zweischichtige, schlauchförmige Nahrungsmittelhülle mit Barrierewirkung für Sauerstoff und Wasserdampf, die in der Lage ist, einen Nahrungsmittelzusatzstoff aufzunehmen, zu speichern und an das Nahrungsmittel abzugeben, **dadurch gekennzeichnet, daß** die innere, dem Lebensmittel zugewandte Schicht eine Matrix aus einem organischen, thermoplastischen Polymermaterial und, eingebettet darin, mindestens einen pulverförmigen organischen Füllstoff, umfaßt, der mindestens einen auf das Füllgut transferierbaren Nahrungsmittelzusatzstoff enthält.

2. Nahrungsmittelhülle gemäß Anspruch 1, **dadurch gekennzeichnet, daß** der Nahrungsmittelzusatzstoff ein transferierbares, bevorzugt flüssiges, Farb-, Geruchs-, Aroma- und/oder Dekorationsmedium ist.

3. Nahrungsmittelhülle gemäß Anspruch 1 oder 2, **dadurch gekennzeichnet, daß** der pulverförmige organische Füllstoff den transferierbaren Nahrungsmittelzusatzstoff unter Quellen in einem Temperaturbereich von 0 bis 40 °C aufnimmt und speichert und ihn dann unter partiellem Lösen des organischen Füllstoffs bei einer Temperatur im Bereich von mehr als 40 °C bis 100 °C auf das Lebensmittel überträgt.

4. Nahrungsmittelhülle gemäß einem oder mehreren der Ansprüche 1 bis 3, **dadurch gekennzeichnet, daß** der pulverförmige organische Füllstoff ein Naturstoff ist, bevorzugt pulverförmiges Carrageenan, Agar, Sojabohnen-Protein, Johannisbrotkernmehl, native, destrukturierte und/oder modifizierte Stärke oder eine Mischung davon.

5. Nahrungsmittelhülle gemäß einem oder mehreren der Ansprüche 1 bis 4, **dadurch gekennzeichnet, daß** die Partikel des pulverförmigen organischen Füllstoffs vor der Zugabe des Nahrungsmittelzusatzstoffs bei einer Dicke der Füllstoffträgerschicht von 60 bis 100 µm einen d(0,5)-Wert von weniger als 20 µm und bei einer Dicke der Füllstoffträgerschicht von 100 bis 200 µm einen d(0,5)-Wert von weniger als 50 µm aufweisen.

6. Nahrungsmittelhülle gemäß einem oder mehreren der Ansprüche 1 bis 5, **dadurch gekennzeichnet, daß** der Anteil des pulverförmigen organischen Füllstoffs bis zu 60 Gew.-%, bevorzugt 15 bis 45 Gew.-%, besonders bevorzugt 25 bis 35 Gew.-%, jeweils bezogen auf das Gewicht der Innenschicht, beträgt.

7. Nahrungsmittelhülle gemäß einem oder mehreren der Ansprüche 1 bis 6, **dadurch gekennzeichnet, daß** der Anteil des transferierbaren Nahrungsmittelzusatzstoffs 5 bis 150 Gew.-%, bevorzugt 30 bis 80 Gew.-%, jeweils bezogen auf das Gewicht des partikelförmigen Füllstoffs, beträgt.

8. Nahrungsmittelhülle gemäß Anspruch 1, **dadurch gekennzeichnet, daß** der transferierbare Nahrungsmittelzusatzstoff ein Flüssigrauch ist.

9. Nahrungsmittelhülle gemäß Anspruch 1, **dadurch gekennzeichnet, daß** die Innenschicht der Schlauchfolie eine Polymermatrix enthält, deren Wasserdampfpermeationskoeffizient PH₂O im Bereich von 3 bis 20 g/m² d, liegt.

10. Nahrungsmittelhülle gemäß Anspruch 1, **dadurch gekennzeichnet, daß** die Matrix ein Ethylen/Vinylacetat-Copolymer umfaßt.

11. Nahrungsmittelhülle gemäß Anspruch 10, **dadurch gekennzeichnet, daß** der Anteil an Vinylacetat-Einheiten in dem Ethylen/Vinylacetat-Copolymer 5 bis 50 Gew.-%, bevorzugt 15 bis 40 Gew.-%, besonders bevorzugt 18 bis 34 Gew.-%, beträgt.

12. Nahrungsmittelhülle gemäß Anspruch 9, **dadurch gekennzeichnet, daß** der Polymermatrix mindestens ein Compatibilizer zugemischt ist.

13. Nahrungsmittelhülle gemäß Anspruch 12, **dadurch gekennzeichnet, daß** der Compatibilizer aus dem Innenschicht-Matrixmaterial besteht, dem nach einer Peroxidradikalinitiierung zwischen 0,1 und 10 Gew.-%, vorzugsweise zwischen 0,3 und 5 Gew.-% eines Compatibilizermoleküls aufgepfropft wurden.

14. Nahrungsmittelhülle gemäß Anspruch 13, **dadurch gekennzeichnet, daß** der Compatibilizer ein mit Maleinsäureanhydrid oder Glycidylmethacrylat gepfropftes Ethylen/Vinylacetat-Copolymer ist.

15. Nahrungsmittelhülle gemäß einem oder mehreren der Ansprüche 1 bis 14, **dadurch gekennzeichnet, daß** an die Füllstoffträgerschicht eine Schicht auf Basis von Polyolefin(en) angrenzt, die als Barriereschicht für Wasserdampf wirkt.

16. Nahrungsmittelhülle gemäß einem oder mehreren der Ansprüche 1 bis 15, **dadurch gekennzeichnet, daß** sie mindestens eine Schicht auf Basis von Polyamid und/oder Copolyamid umfaßt, die als Barriereschicht für Sauerstoff wirkt.

17. Verwendung der Nahrungsmittelhülle gemäß einem oder mehreren der Ansprüche 1 bis 16 als Wursthülle.

## Claims

1. An at least two-layered tubular food casing with barrier properties for oxygen and water vapor, which is capable of absorbing a food additive and storing it, and dissipating it into the food, wherein the inner layer facing toward the food encompasses a matrix composed of an organic thermoplastic polymer material and encompasses, embedded therein, at least one pulverulent organic filler which comprises at least one food additive transferable to the contents.

2. The food casing as claimed in claim 1, wherein the food additive is a transferable, preferably liquid, colorant, odorant, flavoring, and/or decorative medium.

3. The food casing as claimed in claim 1 or 2, wherein the pulverulent organic filler absorbs and stores the transferable food additive with swelling in the temperature range from 0 to 40 °C and then transfers it to the food, with partial dissolution of the organic filler, at a temperature in the range from above 40 to 100 °C.

4. The food casing as claimed in one or more of claims 1 to 3, wherein the pulverulent organic filler is a natural material, preferably pulverulent carrageenan, agar, soybean protein, ground carob beans, native, destructured, and/or modified starch, or a mixture thereof.

5. The food casing as claimed in one or more of claims 1 to 4, wherein the particles of the pulverulent organic filler have, prior to addition of the food additive, a d(0.5) value of less than 20 µm for a filler-substrate layer thickness of from 60 to 100 µm, and a d(0.5) value less than 50 µm for a filler-substrate layer thickness of from 100 to 200 µm.

6. The food casing as claimed in one or more of claims 1 to 5, wherein the proportion of the pulverulent organic filler is up to 60 % by weight, preferably from 15 to 45 % by weight, particularly preferably from 25 to 35 % by weight, based in each case on the weight of the inner layer.

7. The food casing as claimed in one or more of claims 1 to 6, wherein the proportion of the transferable food additive is from 5 to 150 % by weight, preferably from 30 to 80 % by weight, based in each case on the weight of the particulate filler.

8. The food casing as claimed in claim 1, wherein the transferable food additive is a liquid smoke.

9. The food casing as claimed in claim 1, wherein the inner layer of the tube film comprises a polymer matrix whose water vapor permeation coefficient PH₂O is in the range from 3 to 20 g/m² d.

10. The food casing as claimed in claim 1, wherein the matrix encompasses an ethylene-vinyl acetate copolymer.

11. The food casing as claimed in claim 10, wherein the proportion of vinyl acetate units in the ethylene-vinyl acetate copolymer is from 5 to 50 % by weight, preferably from 15 to 40 % by weight, particularly preferably from 18 to 34 % by weight.

12. The food casing as claimed in claim 9, wherein the polymer matrix has at least one admixed compatibilizer.

13. The food casing as claimed in claim 12, wherein the compatibilizer is composed of the inner-layer matrix material onto which from 0.1 to 10 % by weight, preferably from 0.3 to 5 % by weight, of a compatibilizer molecule has been grafted, following peroxide-radical initiation.

14. The food casing as claimed in claim 13, wherein the compatibilizer is a maleic-anhydride- or glycidyl-methacrylate-grafted ethylene-vinyl acetate copolymer.

15. The food casing as claimed in one or more of claims 1 to 14, wherein a layer based on polyolefin(s) is adjacent to the filler-substrate layer and acts as barrier layer for water vapor.

16. The food casing as claimed in one or more of claims 1 to 15, which encompasses at least one layer which is based on polyamide and/or copolyamide and acts as barrier layer for oxygen.

17. The use of the food casing as claimed in one or more of claims 1 to 16 as sausage casing.

## Revendications

1. Enveloppe alimentaire tubulaire comprenant au moins deux couches, à effet barrière contre l'oxygène et la vapeur d'eau susceptible de recevoir, de stocker et de libérer un additif alimentaire à un aliment, **caractérisée en ce que** la couche interne, tournée vers l'aliment, comporte une matrice composée d'un matériau polymère organique, thermoplastique et, noyée dans celle-ci, au moins une charge organique pulvérulente contenant au moins un additif alimentaire pouvant être transféré sur le produit de charge.

2. Enveloppe alimentaire selon la revendication 1, **caractérisée en ce que** l'additif alimentaire est un agent colorant, odorant, aromatique et/ou décoratif transférable et de préférence liquide.

3. Enveloppe alimentaire selon la revendication 1 ou 2, **caractérisée en ce que** la charge organique pulvérulente reçoit et stocke l'additif alimentaire transférable en gonflant dans une plage de température de 0 à 40 °C et le transfère ensuite sur l'aliment à l'occasion d'une dissolution partielle de la charge organique à une température dans la plage de plus de 40°C à 100°C.

4. Enveloppe alimentaire selon l'une ou plusieurs des revendications 1 à 3, **caractérisée en ce que** la charge organique pulvérulente est une substance naturelle, de préférence de la poudre de carragénine, de agar-agar, de protéine de soja, de farine de graine de caroube, d'amidon non transformé, déstructuré et/ou modifié ou un mélange de ceux-ci.

5. Enveloppe alimentaire selon l'une ou plusieurs des revendications 1 à 4, **caractérisée en ce que** les particules de la charge organique pulvérulente présentent, avant d'ajouter l'additif alimentaire, une valeur d(0,5) inférieure à 20 µm lorsque l'épaisseur de la couche de support de la charge s'élève de 60 à 100 µm, et une valeur d(0,5) inférieure à 50 µm lorsque l'épaisseur de la couche de support de la charge s'élève de 100 à 200 µm.

6. Enveloppe alimentaire selon l'une ou plusieurs des revendications 1 à 5, **caractérisée en ce que** la part de charge organique pulvérulente s'élève jusqu'à 60% en poids, de préférence de 15 à 45% en poids, de manière préférée entre toutes de 25 à 35% en poids, respectivement par rapport au poids de la couche interne.

7. Enveloppe alimentaire selon l'une quelconque des revendications 1 à 6, **caractérisée en ce que** la part de l'additif alimentaire transférable s'élève de 5 à 150% en poids, de préférence de 30 à 80% en poids, respectivement par rapport au poids de la charge particulaire.

8. Enveloppe alimentaire selon la revendication 1, **caractérisée en ce que** l'additif alimentaire transférable est une fumée liquide.

9. Enveloppe alimentaire selon la revendication 1, **caractérisée en ce que** la couche interne du film tubulaire contient une matrice polymère, dont le coefficient de perméation à la vapeur d'eau P _{H₂O} se situe dans la plage de 3 à 20 g/m² d.

10. Enveloppe alimentaire selon la revendication 1, **caractérisée en ce que** la matrice comporte un copolymère d'éthylène et d'acétate de vinyle.

11. Enveloppe alimentaire selon la revendication 10, **caractérisée en ce que** la part d'unités d'acétate de vinyle dans le copolymère d'éthylène et d'acétate de vinyle s'élève de 5 à 50% en poids, de préférence de 15 à 40% en poids, de manière préférée entre toutes de 18 à 34% en poids.

12. Enveloppe alimentaire selon la revendication 9, **caractérisée en ce que** la matrice polymère est mélangée à au moins un agent compatibilisant.

13. Enveloppe alimentaire selon la revendication 12, **caractérisée en ce que** l'agent compatibilisant est composé du matériau de la matrice de la couche interne, auquel ont été greffées, après une initiation du radicalaire au peroxyde, entre 0,1 et 10% en poids, de préférence entre 0,3 et 5% en poids d'une molécule d'agent comptabilisant.

14. Enveloppe alimentaire selon la revendication 13, **caractérisée en ce que** l'agent compatibilisant est un copolymère d'éthylène et d'acétate de vinyle auquel on a greffé un anhydride maléique ou un glycidylméthacrylate.

15. Enveloppe alimentaire selon l'une ou plusieurs des revendications 1 à 14, **caractérisée en ce qu'**une couche à base de polyoléfine(s), qui agit comme une couche barrière à la vapeur d'eau, est adjacente à la couche de support de la matière de la charge.

16. Enveloppe alimentaire selon l'une ou plusieurs des revendications 1 à 15, **caractérisée en ce qu'**elle comporte au moins une couche à base de polyamide et/ou de copolyamide, qui agit comme une couche barrière à l'oxygène.

17. Utilisation de l'enveloppe alimentaire selon l'une ou plusieurs des revendications 1 à 16 comme enveloppe de saucisse.
